# EUROPEAN PATENT APPLICATION

(11) **EP 0 705 896 A1**
(43) Date of publication of application: **10.04.1996**
(21) Application number: 95115477.2
(22) Date of filing: 29.09.1995
(51) Int. Cl.: C09J 131/04, C09J 151/00

(54) **Synthetic remoistenable adhesive compositions**

(30) Priority: 03.10.1994 US 317080
(71) Applicant: National Starch and Chemical Investment Holding Corporation, Wilmington, Delaware 19809 (US)
(72) Inventor: Jarlot, Regis Marie Dominique, Sutton Courtenay OX14 4AX (GB); Lepers, Damien Albert, F-59126 Linselles (FR); Liddiment, Tracy Katherine, Binfield, Berkshire RG12 5UT (GB); Stratford, Vicki Ann, East Sheen, London SW14 8DA (GB)
(74) Representative: Hagemann, Heinrich, Dr. rer. nat., Dipl.-Chem.

(57) **Abstract**

Remoistenable adhesive compositions comprising an aqueous emulsion of a polymer containing at least about 60% by weight of vinyl acetate, the polymer having been polymerized in the presence of at least about 20% by weight of the monomer(s) of a polyvinyl alcohol, the alcohol characterized in that a 4% solution thereof has a viscosity of 1 to 70 cps at 20°C, and that it is hydrolyzed to a level of 70-100%.

## Description

This invention relates to a synthetic remoistenable adhesive composition having improved performance properties when compared with existing remoistenable adhesives since it combines the advantages of synthetic remoistenable adhesives with those of dextrin or vinyl-dextrin based remoistenables.

Remoistenable adhesives are commonly utilized in the production of envelopes, stamps, wallpaper, tapes, labels and similar products wherein it is desired to provide a dry adhesive film which, on being moistened with water, will become tacky and thereby allow for the ready adhesion to a chosen substrates. In the manufacture of remoistenable adhesive products, typically an aqueous solution or dispersion, or an organic solvent solution of the dry adhesive material is applied as a wet film to a substrate. After the water or organic solvent is removed by drying and evaporation, the resulting dry adhesive film will, on being moistened, produce the desired tacky adhesive surface.

The ability to provide an adhesive which is remoistenable is not in itself difficult and in fact there are a number of known and commercially available products that are used in various applications requiring a remoistenable adhesive. Some of the known remoistenable adhesive formulations include dextrin based adhesives such as dextrin solutions (dextrin gums) or dextrin solutions plus a water based emulsion of polymers such as polyvinyl acetate or ethylene vinyl acetate as disclosed in U.S. Patent Nos. 4,575,525 issued March 11, 1986 and 4,678,824 issued July 7, 1987; as well as synthetic adhesives which are generally prepared by combining a polyvinyl alcohol with emulsion polymers such as polyvinyl acetate or ethylene vinyl acetate as shown in U.S. Patent No. 2,850,468 issued September 2, 1958.

The usefulness of a particular composition as a remoistenable adhesive in a specific application will depend on its ability to meet the many physical and chemical property requirements and to best satisfy the processing conditions to which it is subjected. Accordingly, a remoistenable adhesive composition in addition to providing a good adhesion and remoistenability, typically is expected to provide a lay flat or non-curl product, satisfy processing conditions of different manufacturing equipment, provide adequate drying speed, resist hygroscopic blocking and satisfy various other requirements depending on the application involved. In this regard, high gloss and fast drying times are normally only achieved with vinyl dextrin based adhesives. Recently, a move to the use of water borne inks in printing the poor blocking resistance of these vinyl dextrin adhesives under humid conditions has become an important limitation. Therefore, a synthetic adhesive with higher gloss and faster drying times, which retains the advantages of current synthetics would offer a real benefit to manufacturers.

We have now found that aqueous emulsions of vinyl acetate based polymers prepared using substantial amounts of polyvinyl alcohol during the polymerization exhibit superior properties when used as remoistenable adhesives.

Thus, the present invention is directed to remoistenable adhesive compositions comprising an aqueous emulsion of a polymer containing at least about 60% by weight of vinyl acetate, the polymer having been polymerized in the presence of at least about 20% by weight of the monomer(s) of a polyvinyl alcohol, which is added continuously throughout the polymerization, the alcohol characterized in that a 4% solution thereof has a viscosity of 1 to 70 cps at 20°C, and a degree of hydrolysis of 70-100%.

The resulting remoistenable adhesives exhibit all the properties of a standard synthetic remoistened adhesive, such as adhesion to difficult papers, good layflat, block resistance and fast setting after remoistening. Moreover, it also has better gloss and much faster drying times (high solids content) than previous synthetic adhesives.

Further, the aqueous emulsion may, if desired, be used directly as an adhesive without the need for further formulation as by the post addition of polyvinyl alcohol on other plasticizers.

The aqueous emulsions useful in this invention are aqueous emulsions of polymers containing at least about 60% by weight of vinyl acetate. Thus, the vinyl acetate polymer can be a homopolymer or a copolymer. Comonomers which can be copolymerized with the vinyl acetate include ethylene as well as alkyl esters of acrylic or methacrylic acid wherein the alkyl groups contains 1 to about 8 carbon atoms. Examples of such comonomers are ethylene, methyl methacrylate, ethyl acrylate, butyl acrylate, butyl methacrylate and 2-ethylhexyl acrylate. Useful copolymers contain at least about 60 weight percent vinyl acetate. The preferred polymer is a copolymer of vinyl acetate and butyl acrylate. The aqueous emulsion polymers have a Tg (glass transition temperature) of -50 to 50°C, preferably 0 to 40°C, more preferably 0 to 30°C and a solid content of 40 to 65 weight percent.

The polyvinyl alcohol component used which is added continuously during the polymerization of the vinyl acetate polymer is partially or fully hydrolyzed with the degree of hydrolysis varying from 70 to 100%, preferably from 80 to 92%, and more preferably from 85 to 90%. The viscosity of the polyvinyl alcohol also varies with a useful range being a viscosity in centipoise of a 4% aqueous solution at 20°C of from 1 to 70. More particularly, the viscosity of the polyvinyl alcohol will be from 3 to 40 cps and preferably in the lower range of from 4 to 10 cps. The polyvinyl alcohol component may be a single alcohol or a blend of polyvinyl alcohols with the same or different degrees of hydrolysis and/or viscosity ranges. The total amount of polyvinyl alcohol added during the polymerization can vary from 20 to 50%, based on the monomer(s) weight, preferably 25 to 35%.

While polymerized alcohol has often been used as a protective colloid in vinyl acetate polymerization, it has been used at much lower levels, i.e., at less than 10% and generally only 3 to 8% by weight.

The polymer is prepared by conventional vinyl acetate polymerization procedures with the one difference being the continuous addition of the polyvinyl alcohol. The polymerization is then carried out in an aqueous medium at atmospheric conditions or, it ethylene is used or a comonomer under pressures less than about 130 atmospheres, in the presence of a catalyst with the system being maintained by a suitable buffering agent, if necessary, at a pH of 2 to 6. The polymerization is performed at conventional temperatures from 70 to 225°F, preferably from 120 to 175°F for sufficient time to achieve a low monomer content, e.g., from 1 to 8 hours, preferably from 3 to 7 hours, to produce a latex having less than about 0.1 weight percent free monomer.

More specifically, a dispersion of polyvinyl alcohol in water, typically at a concentration of 20 to 35%, preferably 28 to 30%, solids, is heated to 85 to 90°C and held for one hour after which defoamer is added and the mixture cooled to room temperature. Approximately 15 to 20% of the resulting mixture (about 4 to 6% dry polyvinyl alcohol) is charged to the reaction vessel. After purging the reactor with nitrogen, a first stage initiator such as water soluble peracid or salt thereof, e.g., hydrogen peroxide, sodium peroxide, lithium peroxide, peracetic acid, persulfuric acid or the ammonium and alkali metal salts thereof, e.g., ammonium persulfate, sodium peracetate, lithium persulfate, potassium persulfate, sodium persulfate, etc. A suitable concentration of the initiator is from 0.05 to 5.0 weight percent and preferably from 0.1 to 3 percent based on the weight of the monomer.

The free radical initiator can be used alone and thermally decomposed to release the free radical initiating species or can be used in combination with a suitable reducing agent in a redox couple. The reducing agent is typically an oxidizable sulfur compound such as an alkali metal metabisulfite and pyrosulfite, e.g., sodium metabisulfite, potassium metabisulfite, sodium pyrosulfite, etc. The reducing agent is generally added towards the end of the polymerization and is used in an amount of from about 0.1 to 3 weight percent of the amount of the polymer. The initiator is followed by the continuous addition over 5 to 6 hours of the remaining polyvinyl alcohol solution (approximately 24 to 26% dry polyvinyl alcohol or monomer weight), the monomer(s) and the reducing agent.

If present, the ethylene content of the copolymer is determined by controlling the ethylene content of the aqueous polymerization medium. This may be accomplished by regulating the partial pressure of ethylene in the vapor phase over the medium, the temperature of polymerization and the degree of mixing between the vapor phase and the liquid medium. Generally, the polymerization, is performed at temperatures from 120 to 175°F and, at these temperatures, ethylene partial pressures from 50 to 1,000, preferably from 250 to 750 psig are sufficient to incorporate from 1 to 30, preferably from 5 to 25, weight percent ethylene in the polymer. The reaction medium is preferably agitated with a stirrer, however, other agitation can be used as spraying the liquid with recirculated ethylene from the vapor phase. In the preferred procedure, the ethylene partial pressures is maintained constant throughout the polymerization period so that this monomer is continuously supplied at a constant rate.

In addition to the polyvinyl alcohol, other protective colloids e.g., polysaccharides or polyvinyl pyrrolidone and/or emulsifiers, generally of the nonionic and anionic oil-in-water variety may also be used in the polymerization reaction. When used, the colloid can comprise from up to 25%, preferably from 4 to 25% of the entire colloidal system while the emulsifier is generally present in amounts of 0.1 to 10 percent, preferably up to 5%, more preferably 0.1 to 2%, of the monomers used in the polymerization and is added either entirely to the initial charge or continuously or intermittently during polymerization or as a post-reaction stabilizer.

The emulsions are produced and used at relatively high solids contents, e.g., between 40 and 75%. The preferred contents of total solids are from 50 to 70%, and, most preferred, from 55 to 60 weight percent.

The resulting emulsions may be used directly as remoistenable adhesives. Alternatively, the practitioner should he so desire, may optionally post-add humectants, plasticizers, preservatives, thickening agents as well as other additives which are conventionally used in remoistenable adhesives. For example the emulsion may be compounded with other conventional adhesives such as surfactants for improved wettability, additional polyvinylalcohol, triacetin for improved remoistening speed especially after aging, and the like.

In the examples which follow, the following preparation procedure was used:
1. Prepare water phase (A) by dispersing gradually the polyvinyl alcohol (Airvol 203) in cold water (1), with stirring. Heat to 85 to 90°C and hold at this temperature for 1 hour. Add defoamer (Agitan 305) and cool to room temperature.
2. Weigh 17% of above into reaction vessel, add water (2), (B) Synperonic A2O and water (3) and (C) sodium bicarbonate. Mix well.
3. Purge vessel with nitrogen.
4. Heat vessel and contents to 78 to 81°C.
5. At 78 to 81°C, add (E) sodium persulphate solution.
6. Follow immediately with continuous addition of the remaining 83% of (A) polyvinyl alcohol solution; (D) vinyl acetate and butyl acrylate mixture and (F) potassium persulphate solution.
7. (A) and (D) are added over 5½ hours at constant rate. (F) is added over 6 hours at constant rate.
8. Temperature will fall slightly at start of continuous additions. Hold reaction temperature at 74 to 76°C.
9. 30 minutes before the end of monomer addition, allow temperature to rise to 78 to 81°C.
10. Initiator (F) will overrun after monomer addition by half an hour. Maintain temperature at 78 to 81°C.
11. At end of initiator additions, begin cooling reactor to room temperature.
12. At 50°C, begin additions of finishing off stage (G) and (H) whilst still cooling.
13. Below 30°C add biocide (I).
14. Filter dispersion through a 120 mesh filter.

Other polymers were made using the general procedure described about but varying the monomer ratios (Table II), using different monomers (Table III), polyvinyl alcohol ratios (Table IV), degrees of hydrolysis (Table V) and mixed colloids (Table VI).

**TABLE I**

| Component | % On Total Disp. Weight | % On Monomer Weight |
|---|---|---|
| A. Airvol 203 | 13.4 | 30.0 |
| Agitan 305 | 0.15 | 0.33 |
| Water (1) | 33.0 | 74.0 |
| Water (2) | 2.46 | 5.52 |
| B. Synperonic A2O | 0.23 | 0.50 |
| Water (3) | 2.03 | 4.55 |
| C. Sodium Bicarbonate | 0.11 | 0.26 |
| D. Vinyl Acetate | 38.0 | 85.0 |
| Butyl Acrylate | 6.7 | 15.0 |
| E. Sodium Persulphate | 0.06 | 0.14 |
| Water (4) | 0.61 | 1.38 |
| F. Potassium Persulphate | 0.06 | 0.14 |
| Water (5) | 2.46 | 5.5 |
| G. t-Butyl Hydroperoxide (70%) | 0.05 | 0.11 |
| Water (6) | 0.30 | 0.69 |
| H. Sodium Metabisulphite | 0.03 | 0.03 |
| Water (7) | 0.30 | 0.69 |
| I. Kathon (1.5%) | 0.15 | 0.33 |
| | 100 | |
| **Airvol 203** 88% hydrolyzed polyvinyl alcohol from Air Products. Viscosity of 4% aqueous solution at 20°C is 4.0 mPa.s (cps). **Agitan 305** Defoamer, a blend of natural fats from Henkel Nopco Ltd. **Synperonic A2O** Nonionic surfactant from Cargo Fleet. Alcohol-ethoxylate with hydrophobe is primary alcohol consisting of 67% C₁₃ and 33% C₁₅. **Kathon LXE (1.5%)** A biocide from Rohm and Haas. A 1.5% solution of a mixture of 5-chloro-2-methyl-4-iso-thiazolin-3-one and 2-methyl-4-isothiazolin-3-one. | | |

The emulsions were used directly and subjected to the following tests.

**Viscosity (cps)** Viscosity measured using Brookfield viscometer:
spindle 4 (or 5 - as appropriate)
speed 20 rpm
temperature 23°C
**% Solid Content** Approximately 1 g of adhesive was weighed accurately into an aluminum dish and placed in a fan oven at 130°C for 30 minutes; the loss in mass corresponded to the water content of the adhesive, and hence the solid content could be determined.

**Particle Size** The particle size was reported as the size mesh below which 50% of the particles could pass.

**Drying Speed** A 30µm (wet) film of adhesive was coated onto 80gsm paper using a Brave coater (a block coater, with adjustable coating weight). After a chosen time (recorded accurately, but approximately 1 minute), a strip of cigarette paper was placed onto the wet film and a 1kg/cm² weight applied for 10 seconds. The weight was removed and this process repeated for further strips, noting the time at which each was applied (12 seconds between the application of each strip). After continuing this for 4½ minutes (when strips were no longer sticking), the strips were immediately peeled off in turn. The time at which no further fibre tear occurred was recorded as the drying speed. This method was repeated for each sample until consistent results were obtained.

Note: Because of variation in laboratory conditions, a control was included in each set of samples to enable meaningful results to be obtained.

**Setting Speed After Remoistening** A 30µm film (wet) of adhesive was coated onto 80gsm paper using a Braive coater and allowed to dry for 48 hours (at 23°C, 55% RH) 3 strips (1.0cm wide, and approximately 12cm long - to leave uncoated paper at the ends of each strip) were cut across the film. One of the strips was remoistened with a sponge roller (or brush), adhered to an uncoated sheet of paper and then rolled 4 times with a 2kg FINAT roller. A stopwatch was started and immediately, the strip was slowly peeled away; the time at which fibre tear occurred was noted. This method was repeated for further strips until consistent results were obtained.

**Ageing** After room temperature drying, sheets coated with adhesive were placed in an oven at 70°C for 1 week, and then the test performed using this aged material as above.

**Blocking Resistance** - Adhesive to Paper - A 30µm film (wet) of adhesive was coated onto 80gsm paper and allowed to dry for 48 hours (at 23°C, 55% RH). Pieces of size 5 x 4cm were cut in the adhesive film (no uncoated paper).

Two pieces were placed with coated surface of one in contact with the uncoated surface of the other, and a pile made of three such pairs. Test pieces for other adhesives to be evaluated were prepared, as above. The piles were placed between 2 glass plates and a 2kg weight placed on top of the glass (to apply a pressure of 50kg/cm² to each pile). These were then stored for 14 days at 40°C and 90% RH. After this period, the pressure was removed and the test pieces were peeled off the piles one at a time. Percent fibre tear was noted for each sample (% FT A/P).

In addition to evaluating the various polymers as remoistening adhesive, the polymer described in Table 1 was also compared against a standard commercial synthetic adhesive based on a conventionally polyvinyl alcohol stabilized polymer (about 5% PVOH) with post-added polyvinyl alcohol (to about 20% total), as well as a dextrin based adhesive. The results are presented in Table VII.

As the testing results show, by appropriate formulation, remoistenable adhesives can be prepared exhibiting a wide variety of properties and suitable for a number of different applications. For example, in the case of remoistenable adhesives for envelope front seals, optimum results are obtained from a copolymer comprising 15 parts butyl acrylate and 85 parts vinyl acetate, the polymerization being carried out in the presence of 20 to 30% by weight of 88% hydrolyzed polyvinyl alcohol having a viscosity of 3 to 4 cps at 20°C.

**TABLE II**

| **Variation in Monomer Ratios** | | | | | | | |
|---|---|---|---|---|---|---|---|
| Polymer | % Solids | Viscosity (poise) | PSD [0.5] | Drying Time | Setting Speed (secs.) | | Blocking Resistance % FT |
| | | | | | RT | Ageing | A/P |
| 100% VA | 55.9 | 85.3 | 0.45 | 2 min 01 | Poor | >30 | 0 |
| 90/10 VA/BA | 59.0 | 119 | 0.47 | 2 min 10 | 12 | >30 | 2 |
| 85/15 VA/BA | 58.3 | 37.6 | 0.54 | 1 min 46 | 11 | >30 | 0 |
| 80/20 VA/BA | 58.4 | 40.9 | 0.64 | 2 min 02 | 6 | >30 | 50 |
| All of the above were stabilized with a total of 24% 88% hydrolyzed PVOH on monomer weight. VA = vinyl acetate BA = butyl acrylate | | | | | | | |

**TABLE III**

| **Use of Different Monomers** | | | | | | | |
|---|---|---|---|---|---|---|---|
| Polymer | % Solids | Viscosity (poise) | PSD [0.5] | Drying Time | Setting Speed (secs.) | | Blocking Resistance % FT |
| | | | | | RT | Ageing | A/P |
| 100% VA | 54.2 | 31.4 | 0.38 | 1 min 51 | >30 | >30 | 0 |
| VA/BA 85/15 | 59.5 | 43.4 | 0.62 | 2 min 22 | 7 | 12 | 0 |
| VA/E 90/10 | 54.5 | 160 | 0.69 | 3 min 10 | 5 | >30 | 0 |
| All of the above are based on 20% on monomer weight of 88% hydrolyzed PVOH. E = ethylene | | | | | | | |

**TABLE IV**

| **Variation in PVOH Levels (all 88% hydrolyzed)** | | | | | | | |
|---|---|---|---|---|---|---|---|
| PVOH Level | % Solids | Viscosity (poise) | PSD [0.5] | Drying Time | Setting Speed (secs.) | | Blocking Resistance % FT |
| | | | | | RT | Ageing | A/P |
| 20% GLO3 | 59.5 | 43.4 | 0.62 | 2 min 22 | 7 | 12 | N/T |
| 24% GLO3 | 58.3 | 37.6 | 0.54 | 1 min 46 | 11 | >30 | 0 |
| 26% GLO3 | 57.8 | 54.8 | 0.49 | 1 min 43 | 8 | >30 | 0 |
| 30% GLO3 | 57.2 | 68.1 | 0.64 | 2 min 37 | 5 | 5 | 0 |
| All the above polymers were 85/15 VA/BA. GLO3 = Ghosenol GLO3 from Nippon Gossen - 98% hydrolyzed, a 4% solution has a viscosity of 3 cps. | | | | | | | |

**TABLE V**

| **Variation in PVOH Degree of Hydrolysis** | | | | | | | |
|---|---|---|---|---|---|---|---|
| PVOH Hydrolysis + % (On Monomer Weight) | % Solids | Viscosity (poise) | PSD [0.5] | Drying Time | Setting Speed (secs.) | | Blocking Resistance % FT |
| | | | | | RT | Ageing | A/P |
| 30% GLO3 88% hydrolyzed | 58.0 | 80.5 | 0.49 | 2 min 10 | 4 | 20 | 0 |
| 28.95% of 88% + 1.05% of 80% | 56.3 | 318 | 0.54 | Not tested | | | |
| 28.8% of 88% + 2% of 92% | 57.0 | 179 | 0.54 | 3 min 10 | 7 | 7 | 5 |
| All of the polymers are VA/BA 85/15. | | | | | | | |

**TABLE VI**

| **Mixed Colloid Systems** | | | | | | | |
|---|---|---|---|---|---|---|---|
| Colloid System | % Solids | Viscosity (poise) | PSD [0.5] | Drying Time | Setting Speed (secs.) | | Blocking Resistance % FT |
| | | | | | RT | Ageing | A/P |
| 24% GLO3 | 58.3 | 37.6 | 0.54 | 1 min 46 | 11 | >30 | 0 |
| 24% GLO3 + 1% HEC | 57.3 | 45.0 | 0.51 | 2 min 22 | 6 | 38 | 0 |
| 24% GLO3 + 2% HEC | 56.7 | 132 | 0.66 | 2 min 34 | 10 | 22 | 0 |
| All the above were VA/BA 85/15 polymers. HEC is hydroxy ethyl cellulose = (Natrosol 250 LR) | | | | | | | |

**TABLE VII**

| **New Synthetic Product vs. Standard Synthetic and Dextrin Adhesive** | | | | | | | |
|---|---|---|---|---|---|---|---|
| Adhesive | % Solids | Viscosity (poise) | Gloss | Drying Time | Setting Speed (secs.) | | Blocking Resistance % FT |
| | | | | | RT | Ageing | A/P |
| Table I | 58.0 | 75.6 | Good | 2 min 40 | 3 | 5 | 0 |
| Std. synthetic | 45 | --- | Poor | 4 min 20 | 5 | 5 | 0 |
| Dextrin | | --- | Very Good | 1 min 50 | 20 | 20 | 100 |

## Claims

1. Remoistenable adhesive compositions comprising an aqueous emulsion of a polymer containing at least about 60% by weight of vinyl acetate, the polymer having been polymerized in the presence of at least about 20% by weight of the monomer(s) of a polyvinyl alcohol, the alcohol characterized in that a 4% solution thereof has a viscosity of 1 to 70 cps at 20°C, and that it is hydrolyzed to a level of 70-100%.

2. The remoistenable adhesive of Claim 1 wherein the vinyl acetate polymer is a homopolymer a copolymer with at least one C₁ to C₈ alkyl ester of acrylic or methacrylic acid.

3. The remoistenable adhesive of Claim 1 wherein the vinyl acetate polymer is a ethylene vinyl acetate.

4. The remoistenable adhesive of Claim 3 wherein the vinyl acetate polymer is a copolymer of vinyl acetate and butyl acrylate.

5. The remoistenable adhesive of Claim 1 wherein the polyvinyl alcohol has a degree of hydrolysis of 80 to 92%.

6. The remoistenable adhesive of Claim 1 wherein a 4% solution of the polyvinyl alcohol has a viscosity of 3 to 40 cps at 20°C.

7. The remoistenable adhesive of Claim 1 wherein the polyvinyl alcohol is present in an amount of 20 to 50% by weight of the monomer(s).

8. The remoistenable adhesive of Claim 1 wherein approximately 20% of the polyvinyl alcohol is initially charged into the reactor and the remainder is added continuously during the polymerization reaction.

9. The remoistenable adhesive of Claim 1 wherein up to 25% by weight of the polyvinyl alcohol is replaced with another protective colloid.

10. A remoistenable adhesive composition comprising an aqueous emulsion of a polymer containing 85% by weight vinyl acetate and 15% by weight butyl acrylate, the polymer having been polymerized in the presence of 20 to 30% by weight of the monomers of 88% hydrolyzed polyvinyl alcohol, the alcohol characterized in that a 4% solution thereof has a viscosity of 3 to 4 cps at 20°C.
